# EUROPÄISCHE PATENTSCHRIFT

(11) **EP 2 288 669 B1**
(45) Veröffentlichungstag und Bekanntmachung des Hinweises auf die Patenterteilung: **06.01.2016**
(21) Anmeldenummer: 09749757.2
(22) Anmeldetag: 14.05.2009
(51) Int. Cl.: C09J 103/06, C09J 101/10, C09J 105/00

(54) **VERFAHREN ZUR HERSTELLUNG EINES HEISSSCHMELZBAREN KLEBER**
METHOD FOR THE MANUFACTURE OF A HOT-MELT ADHESIVE
PROCÉDÉ DE PRODUCTION D'UN ADHÉSIF THERMOFUSIBLE

(30) Priorität: 17.05.2008 DE 102008024089
(43) Veröffentlichungstag der Anmeldung: 02.03.2011
(73) Patentinhaber: Innovent e.V., 07745 Jena (DE); Friedrich-Schiller-Universität, 07743 Jena (DE)
(72) Erfinder: GRÜNLER, Bernd, 07937 Zeulenroda (DE); HEFT, Andreas, 07545 Gera (DE); HOMUTH, Marion, 07745 Jena (DE); HEINZE, Thomas, 07743 Jena (DE); LIEBERT, Tim, 07743 Jena (DE)
(74) Vertreter: Liedtke, Markus
(86) Internationale Anmeldenummer: PCT/EP2009/055873
(87) Internationale Veröffentlichungsnummer: WO 2009/141267

(56) Entgegenhaltungen:
- EP-A- 0 705 895
- WO-A-2005/033243
- GB-A- 2 291 333
- US-A- 5 434 201
- NEUMANN U ET AL: "Synthesis of hydrophobic starch esters by reaction of starch with various carboxylic acid imidazolides" STARCH/STAERKE OCTOBER 2002 WILEY-VCH VERLAG DE, Bd. 54, Nr. 10, Oktober 2002 (2002-10), Seiten 449-453, XP002542839
- HAN ET AL: "Synthesis and anti-hyperlipidemic activity of a novel starch piperinic ester" CARBOHYDRATE POLYMERS, APPLIED SCIENCE PUBLISHERS, LTD. BARKING, GB, Bd. 71, Nr. 3, 6. Dezember 2007 (2007-12-06), Seiten 441-447, XP022379015 ISSN: 0144-8617

## Beschreibung

Die Erfindung betrifft ein Verfahren zur Herstellung eines heißschmelzbaren Klebers.

Heißschmelzbare Kleber sind solche Klebstoffe, die im warmen oder heißen Zustand auf zu verbindende Teile aufgetragen werden. Die Teile werden anschließend zusammen gefügt. Beim Abkühlen des heißschmelzbaren Klebers erstarrt dieser und verbindet die Teile miteinander. Unter erneuter Anwendung von Wärme wird der heißschmelzbare Kleber wieder verflüssigt, so dass die Verbindung der Teile lösbar oder ihre Position zueinander veränderbar ist. Stetig steigende Rohstoffpreise für Erdöl bei gleichzeitig abnehmender Verfügbarkeit führen zu steigenden Kosten bei der Herstellung solcher heißschmelzenden Kleber, da deren Hauptbestandteile Erdölprodukte sind.

Aus der US 5,434,201 ist ein Verfahren zur Herstellung eines Heißschmelzklebers bekannt, der einen Stärkeester mit einem Substitutionsgrad von 0.3 bis 3.0 sowie einen ausgewählten nichtflüchtigen organischen Weichmacher enthält, wobei der Stärkeester ein wässriges System mit mindestens 40 Gewichts-% Feuchtigkeit ist. Solche Heißschmelzkleber neigen beim Erstarren zu Phasenseparationen. Eine transparente Matrix ist auf diese Weise nicht realisierbar.

Aus NEUMANN U ET AL: "Synthesis of hydrophobic starch esters by reaction of starch with various carboxylic acid imidazolides" STARCH/STAERKE OC-TOBER 2002 WILEY-VCH VERLAG DE, Bd. 54, Nr. 10, Oktober 2002 (2002-10), Seiten 449-453, XP002542839 ist ein Verfahren zur Herstellung von hydrophoben Stärkeestern bekannt.

Aus HAN ET AL: "Synthesis and anti-hyperlipidemic activity of a novel starch piperinic ester" CARBOHYDRATE POLYMERS, APPLIED SCIENCE PUB-LISHERS, LTD. BARKING, GB, Bd. 71, Nr. 3, 6. Dezember 2007 (2007-12-06), Seiten 441-447, XP022379015 ISSN: 0144-8617 ist die Synthetisierung eines Stärke-Piperin.Esters bekannt.

GB 2 291 333 A offenbart Hüllen biologisch abbaubarer Zigarettenfilter, die mit einem wasserempfindlichen Heißschmelzkleber abgedichtet sind, enthaltend 20-60% Stärkeester mit 2-18 C-Atomen in der Estergruppe und einem Substitutionsgrad von 0,3-2,5 (z.B. Stärkepropionat), 5-40% polares Wachs (z. B. auf Basis von Stearamid), 5-50% Plastifizier-Verdünnungsmittel (z. B. ein ethoxyliertes Phenol) und gegebenenfalls bis zu 25% Klebrigmacher und bis zu 3% Antioxidans.

EP 0705 895 A1 offenbart ein Verfahren zum Verkleben von Gewebe oder Vlies zu ähnlichen oder unähnlichen Substraten, umfassend den Schritt des Aufbringens einer geschmolzenen Schmelzkleber-Zusammensetzung auf das Substrat, wobei der Klebstoff 20 bis 60 Gew.% von einem Stärkeester mit mittlerem oder hohem DS mit etwa 2 bis 18 Kohlenstoffatomen in der Ester-Komponente und einem DS (Substitutionsgrad) von etwa 0,3 bis 2,5, 5 bis 40 Gew.% eines polaren Wachses, 5 bis 50 Gew.% eines weichmachenden Verdünnungsmittel, 0 bis 25 Gew.% eines kompatiblen Klebrigmachers und 0 bis 3 Gew.% eines Antioxidans umfasst.

WO 2005/033243 A1 offenbart einen Schmelzklebstoff, enthaltend A) 20 - 95 Gew.-% mindestens eines Zuckeralkohols und B) 5 - 80 Gew.-% mindestens eines wasserlöslichen oder wasserdispergierbaren Polymeren. Der Schmelzklebstoff ist wasserlöslich und wird zum Verkleben von recyclebaren bzw. mehrfach verwendbaren Materialien verwendet. Insbesondere wird er verwendet zum Verkleben von cellulosehaItigen Materialien, beispielsweise für den Kartonverschluss, zur Herstellung von mehrlagig verklebten Papieren, z. B. Briefumschläge, Tissue, in der Buchbinderei und zur Etikettierung. Der Schmelzklebstoff zeichnet sich dadurch aus, dass er leicht biologisch abbaubar ist und nach Lagerung bei einer Temperatur von 180° Celsius über einen Zeitraum von 3 Stunden eine Farbzahl nach Gardner von kleiner bis gleich 10 aufweist.

Der Erfindung liegt die Aufgabe zu Grunde, ein verbessertes Verfahren zur Herstellung eines heißschmelzbaren Klebers anzugeben.

Die Aufgabe wird erfindungsgemäß gelöst durch ein Verfahren mit den Merkmalen des Anspruchs 1.

Vorteilhafte Ausgestaltungen der Erfindung sind Gegenstand der Unteransprüche.

Der heißschmelzbare Kleber umfasst mindestens einen durch Reaktion eines Polysaccharids mit einem Imidazolid in geschmolzenem Imidazol gewonnenen Polysaccharidester. Erfindungsgemäß wird der heißschmelzbare Kleber mittels eines Verfahrens hergestellt, bei dem Imidazol geschmolzen und ein Säurechlorid und/oder ein Säureanhydrid und/oder ein Lacton in und mit dem geschmolzenen Imidazol zu einem Imidazolid umgesetzt wird. Dem geschmolzenen Imidazol wird mindestens ein Polysaccharid zugesetzt. Das Polysaccharid wird mit dem Imidazolid zu einem Polysaccharidester umgesetzt. Dieser bildet einen transparenten heißschmelzbaren Kleber, der auch nach dem Erstarren transparent bleibt. Mit einem solchen thermoplastischen Kleber lassen sich beispielsweise Glasteile reversibel miteinander verkleben, ohne dass die Transparenz beeinträchtigt wird.

Der durch das erfindungsgemäße Verfahren hergestellte heißschmelzende Kleber schmilzt in einem großen Temperaturbereich homogen und ergibt eine transparente Schmelze, die beim Erhärten eine optisch völlig transparente Schicht zwischen den zu klebenden Teilen (z.B. Glas) ergibt.

Die durch das erfindungsgemäße Verfahren erzielten Verbindungen (Polysaccharidester) sind sehr rein, d.h. sie enthalten keine Nebenprodukte und/oder weisen keine Fehlstellen auf, wie das der Fall bei Estern ist, die über andere Verfahren hergestellt werden. Dieser hohe Reinheitsgrad ist der Grund für die hohe Transparenz der Schmelzen.

Polysaccharide und deren Derivate sind gut geeignet für die Herstellung von Spezialpolymeren, da sie aus nachwachsenden Rohstoffen verfügbar, recycelbar, sehr gut modifizierbar, biokompatibel und strukturbildend sind.

Das geschmolzene Imidazol dient im erfindungsgemäßen Verfahren nicht nur als Suspensions- und Quellmedium für die Polysaccharide, sondern wird zum Teil mit dem Säurechlorid, Säureanhydrid bzw. Lacton intermediär zu Imidazoliden umgesetzt. Die Imidazolide stellen eine sehr effektive und gleichmäßige Veresterung der Polysaccharide sicher. Der Schmelzpunkt des Polysaccharidesters lässt sich durch die Wahl eines Polymerrückgrats, einer Verzweigungsstruktur, von Substituenten und eines Funktionalisierungsgrades einstellen. Das Polymerrückgrat bezeichnet bei Mehrfachzuckern die Auswahl der Stellen in den Monosacchariden, an denen diese miteinander verbunden sind. Die Verzweigungsstruktur bezeichnet die Belegung von bei der Verbindung der Monosaccharide mit gleichen oder anderen Mono- oder Oligosacchariden freibleibenden Stellen der Grundstruktur des Monosaccharids. Der Funktionalisierungsgrad ist ein Maß dafür, wie viele dieser Stellen mit chemischen Gruppen oder Verbindungen (Substituenten) belegt werden. Mit der Auswahl dieser Parameter lässt sich außer einer Erweichungstemperatur auch die optische Transparenz, eine Viskosität der Schmelze, ein Haftverhalten und ein Suspensionsvermögen für eingebettete Partikel einstellen. Ein so gestalteter heißschmelzender Kleber kann wiederholt aufgeschmolzen werden und erstarren, ohne dass seine mechanischen und optischen Eigenschaften sich ändern.

In einer bevorzugten Ausführungsform werden dem Polysaccharidester funktionalisierte Nanopartikel zur Modifikation mindestens einer Eigenschaft des Polysaccharidesters zugesetzt. Mit diesen Nanopartikeln kann beispielsweise eine Farbe und/oder eine elektrische Leitfähigkeit des Polysaccharidesters modifiziert werden. Die elektrische Leitfähigkeit kann dabei so gestaltet werden, dass bei Anlegen einer Spannung ein Stromfluss zustande kommt, der den Kleber so erwärmt, dass dieser schmilzt, um die miteinander verbundenen Teile zu repositionieren oder ihre Verbindung zu lösen.

Die Nanopartikel können permanente oder photochrom schaltende Farbstoffe enthalten. Photochrom schaltende Farbstoffe ändern ihre Farbe unter Einwirkung von Licht.

In einer besonders bevorzugten Ausführungsform des Verfahrens wird der Polysaccharidester durch Waschen mit Isopropanol isoliert, insbesondere nach dem Abkühlen der Reaktionsmischung. Das Isopropanol wird anschließend abgezogen, beispielsweise mittels Erwärmen und Vakuum, und mit ethanolischer Natronlauge gewaschen, wodurch das Imidazol regeneriert wird. Damit steht es als Reaktionsmedium anschließend wieder zur Verfügung.

Als Polysaccharid kommt erfindungsgemäß mindestens ein Stoff aus der Gruppe Cellulose, Scleroglucan, Curdlan, Xylan, Pullulan, Stärke, Dextran zum Einsatz. Diese Stoffe lassen sich bei Temperaturen von mehr als 90° C in geschmolzenem Imidazol ohne erkennbaren Abbau suspendieren. In den entstehenden Schmelzen können die Polysaccharide direkt zu den entsprechenden Derivaten umgesetzt werden. Als Derivate kommen dabei aromatische ungesättigte und aliphatische Ester, vorzugsweise Fettsäureester (Carbonsäuren mit Kettenlängen von vier bis 18 Kohlenstoffatomen) in Frage. Das Imidazolid kann in situ oder in einem separaten Reaktionsgefäß hergestellt werden. Die Regeneration des Imidazols wird durch die Herstellung der reaktiven Imidazolide direkt in der Schmelze ohne Isolierung (in situ) stark begünstigt. Zudem erhöht sich die Effektivität des Verfahrens durch die in-situ-Herstellung des Imidazolids.

Beim Einsatz von Dextran ergeben sich Dextranester mit Schmelzpunkten in einem Bereich von 40° C bis 70° C. Mit Stärke entstehen entsprechende Stärkederivate mit Schmelzpunkten im Bereich von 160° C bis 280° C.

In einer besonders bevorzugten Ausführungsform umfasst der Kleber genau einen Polysaccharidester, das heißt, es wird genau ein Polysaccharid zu genau einem Polysaccharidester umgesetzt. Insbesondere enthält der Kleber keine flüchtigen Beimengungen, da diese das homogene Aufschmelzen behindern können. Außerdem können flüchtige Bestandteile im Kleber durch Sonneneinstrahlung freigesetzt werden, womit die Stabilität des Komposits gefährdet wäre. Daher ist der Schmelzkleber vorzugsweise eine einzige polymere Substanz und kein Gemisch oder feuchter Stoff oder anderweitig verunreinigter Stoff.

Die kennzeichnenden Merkmale der Ansprüche 2 bis 8 sind auch mit anders hergestellten und/oder anders zusammengesetzten heißschmelzbaren Klebern kombinierbar.

Ausführungsbeispiele der Erfindung werden im Folgenden anhand einer Zeichnung näher erläutert.

Darin zeigt:

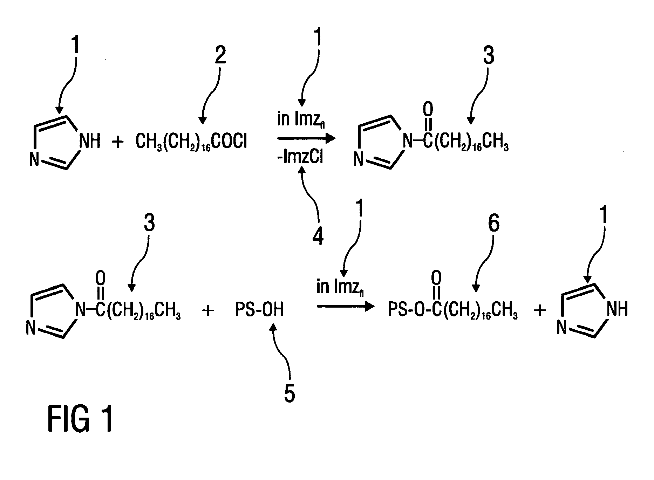

- Figur 1: Reaktionsgleichungen für die Herstellung eines heißschmelzenden Klebers.

Figur 1 zeigt beispielhaft zwei Reaktionsgleichungen, die Reaktionen bei der Herstellung eines heißschmelzenden Klebers beschreiben. Dabei wird zunächst Imidazol 1 geschmolzen. Dem geschmolzenen Imidazol 1 wird ein Säurechlorid 2 zugegeben. Dabei entsteht ein Imidazolid 3. Imidazoliumchlorid 4 wird frei. Dem geschmolzenen Imidazol 1 mit dem Imidazolid 3 wird ein Polysaccharid 5 zugesetzt. Dabei entsteht ein Polysaccharidester 6 während Imidazol 1 regeneriert wird. Exemplarisch wird als Säurechlorid 2 ein Stearinsäurechlorid verwendet. Dementsprechend ist der Polysaccharidester 6 ein Polysaccharidstearat. Es können jedoch auch andere Säurechloride 2 verwendet werden.

Statt des Säurechlorids 2 kann ein Säureanhydrid und/oder ein Lacton verwendet werden.

In einem weiteren, nicht illustrierten Ausführungsbeispiel des Verfahrens zur Herstellung des heißschmelzenden Klebers werden 45 g Imidazol 1 bei einer Temperatur von 90° C bis 95° C aufgeschmolzen. Zum geschmolzenen Imidazol 1 werden als Polysaccharid 5 fünf Gramm Kartoffelstärke gegeben. Die Schmelze wird etwa zwei Stunden lang auf dieser Temperatur gehalten. Danach wird als Säurechlorid 2 eine Menge von 93,6 ml Palmitoylchlorid zugesetzt. Nach weiteren 24 Stunden bei der angegebenen Temperatur wird die Wärmezufuhr gestoppt, so dass die Schmelze langsam abkühlt. Danach werden 500 ml Isopropanol zugesetzt. Die entstehende Mischung wird in 1 l Isopropanol überführt. Das dabei isolierte Produkt wird dreimal mit je 200 ml Isopropanol gewaschen und anschließend im Vakuum getrocknet. Als Polysaccharidester 6 werden dabei 25 g Stärkepalmitat erhalten. Dieses ergibt bei 160° C eine transparente Schmelze. Zu Filmen gegossen werden daraus klare, farblose Schichten.

Dem Polysaccharidester 6 können funktionalisierte Nanopartikel zur Modifikation mindestens einer Eigenschaft des Polysaccharidesters 6 zugesetzt werden. Mit diesen Nanopartikeln kann beispielsweise eine Farbe und/oder eine elektrische Leitfähigkeit des Polysaccharidesters 6 modifiziert werden. Die elektrische Leitfähigkeit kann dabei so gestaltet werden, dass bei Anlegen einer Spannung ein Stromfluss zustande kommt, der den Kleber so erwärmt, dass dieser schmilzt, um durch den Kleber miteinander verbundene Teile zu repositionieren oder ihre Verbindung zu lösen.

Die Nanopartikel können permanente oder photochrom schaltende Farbstoffe enthalten. Photochrom schaltende Farbstoffe ändern ihre Farbe unter Einwirkung von Licht.

In einem nicht illustrierten Ausführungsbeispiel wurde ein grobpulvriger thermoplastischer Polysaccharidester 6 mit einem Schmelzpunkt in einem Bereich von 90° C bis 120° C mit 2% Nanopartikeln in Form nanoskaliger Alumosilikatkäfige mit darin verkapselten photochrom schaltenden Farbstoffen durch ein mechanisches Mahl-/Mischverfahren versetzt. Durch das Mischverfahren wurde eine Homogenisierung der Nanopartikel in der nun feinpulvrigen Matrix des Polysaccharidesters 6 erzielt. Diese Mischung wurde zwischen zwei Glasplatten verbracht und unter leichtem Druck von etwa 0,7 * 10⁵ Pa bei einer Temperatur von 95° C geschmolzen. Dadurch wurde ein transparenter, bei Normaltemperatur fest haftender Glasverbund hergestellt, welcher bei intensiver Sonnenstrahlung eine leichte Blaufärbung annimmt. Durch erneutes Erwärmen auf über 90° C kann dieser Glasverbund wieder gelöst oder die Position der Glasplatten zueinander verändert werden. Nach dem erneuten Abkühlen des heißschmelzbaren Klebers sind sowohl seine optischen als auch mechanischen Eigenschaften unverändert gegenüber der ersten hergestellten Konfiguration.

Als Polysaccharid 5 kommt erfindungsgemäß mindestens ein Stoff aus der Gruppe Cellulose, Scleroglucan, Curdlan, Xylan, Pullulan, Stärke, Dextran zum Einsatz.

Das Imidazolid 3 kann in situ oder in einem separaten Reaktionsgefäß hergestellt werden.

Anstatt Isopropanol kann im dargestellten Ausführungsbeispiel auch ein anderes organisches Lösungsmittel verwendet werden.

### BEZUGSZEICHENLISTE

- 1: Imidazol
- 2: Säurechlorid
- 3: Imidazolid
- 4: Imidazoliumchlorid
- 5: Polysaccharid
- 6: Polysaccharidester

## Patentansprüche

1. Verfahren zur Herstellung eines heißschmelzbaren Klebers, wobei ein Säurechlorid (2) und/oder ein Säureanhydrid und/oder ein Lacton in Imidazol (1) zu einem Imidazolid (3) umgesetzt wird, wobei dem Imidazol (1) mit dem Imidazolid (3) mindestens ein Polysaccharid (5) aus der Gruppe Cellulose, Scleroglucan, Curdlan, Xylan, Pullulan, Stärke, Dextran zugesetzt wird, wobei das Polysaccharid (5) mit dem Imidazolid (3) zu einem Polysaccharidester (6) umgesetzt wird,
**dadurch gekennzeichnet, dass** zuerst das Imidazol (1) geschmolzen wird, wobei die Bildung des Imidazolids (3) in-situ direkt in der Schmelze ohne Isolierung erfolgt, wobei auch die Umsetzung des Polysaccharids (5) im geschmolzenen Imidazol (1) als Suspensions- und Quellmedium durchgeführt wird.

2. Verfahren nach Anspruch 1, **dadurch gekennzeichnet, dass** funktionalisierte Nanopartikel zur Modifikation mindestens einer Eigenschaft des heißschmelzbaren Klebers zugegeben werden.

3. Verfahren nach Anspruch 2, **dadurch gekennzeichnet, dass** durch die Nanopartikel eine Farbe des heißschmelzbaren Klebers modifiziert wird.

4. Verfahren nach Anspruch 3, **dadurch gekennzeichnet, dass** Nanopartikel mit photochrom schaltenden Farbstoffen verwendet werden.

5. Verfahren nach einem der Ansprüche 2 bis 4, **dadurch gekennzeichnet, dass** durch die Nanopartikel eine elektrische Leitfähigkeit des heißschmelzbaren Klebers modifiziert wird.

6. Verfahren nach Anspruch 5, **dadurch gekennzeichnet, dass** die Leitfähigkeit so modifiziert wird, dass der heißschmelzbare Kleber durch Anlegen einer Spannung erwärmbar und schmelzbar wird.

7. Verfahren nach einem der Ansprüche 1 bis 6, **dadurch gekennzeichnet, dass** der Polysaccharidester (6) durch Waschen mit Isopropanol isoliert wird, wobei das Isopropanol abgezogen und mit ethanolischer Natronlauge gewaschen wird, wodurch das Imidazol (1) regeneriert wird.

8. Verfahren nach einem der vorhergehenden Ansprüche, **dadurch gekennzeichnet, dass** genau ein Polysaccharid zu genau einem Polysaccharidester umgesetzt wird.

## Claims

1. Method for the manufacture of a hot-melt adhesive, by reacting an acid chloride (2) and/or an acid anhydride and/or a lactone in imidazole (1) to give an imidazolide (3), at least one polysaccharide (5) from the group of cellulose, scleroglucan, curdlan, xylan, pullulan, starch and dextran being added to the imidazole (1) with the imidazolide (3), the polysaccharide (5) being reacted with the imidazolide (3) to give a polysaccharide ester (6), **characterized in that** first the imidazole (1) is melted, the imidazolide (3) being formed in situ directly in the melt without isolation, and the reaction of the polysaccharide (5) being carried out in the melted imidazole (1) as medium of suspension and of swelling.

2. Method according to Claim 1, **characterized in that** functionalized nanoparticles are added for modifying at least one property of the hot-melt adhesive.

3. Method according to Claim 2, **characterized in that** the nanoparticles modify a colour of the hot-melt adhesive.

4. Method according to Claim 3, **characterized in that** nanoparticles with photochromically switching dyes are used.

5. Method according to any of Claims 2 to 4, **characterized in that** the nanoparticles modify an electrical conductivity of the hot-melt adhesive.

6. Method according to Claim 5, **characterized in that** the conductivity is modified such that the hot-melt adhesive becomes heatable and meltable by application of a voltage.

7. Method according to any of Claims 1 to 6, **characterized in that** the polysaccharide ester (6) is isolated by washing with isopropanol, the isopropanol being stripped off and washed with ethanolic sodium hydroxide solution in order to regenerate the imidazole (1).

8. Method according to any of the preceding claims, **characterized in that** exactly one polysaccharide is reacted to give exactly one polysaccharide ester.

## Revendications

1. Procédé de production d'un adhésif thermofusible, selon lequel un chlorure d'acide (2) et/ou un anhydride d'acide et/ou une lactone sont transformés dans de l'imidazole (1) en un imidazolide (3), au moins un polysaccharide (5) du groupe constitué par la cellulose, le scléroglucane, le curdlane, le xylane, le pullulane, l'amidon, le dextrane est ajouté à l'imidazole (1) contenant l'imidazolide (3), le polysaccharide (5) réagit avec l'imidazolide (3) pour former un ester de polysaccharide (6),
**caractérisé en ce que** l'imidazole (1) est tout d'abord fondu, la formation de l'imidazolide (3) ayant lieu in situ directement dans la masse fondue sans isolement, la mise en réaction du polysaccharide (5) étant également réalisée dans l'imidazole (1) fondu en tant que milieu de suspension et de gonflement.

2. Procédé selon la revendication 1, **caractérisé en ce que** des nanoparticules fonctionnalisées sont ajoutées pour la modification d'au moins une propriété de l'adhésif thermofusible.

3. Procédé selon la revendication 2, **caractérisé en ce qu'**une couleur de l'adhésif thermofusible est modifiée par les nanoparticules.

4. Procédé selon la revendication 3, **caractérisé en ce que** des nanoparticules contenant des colorants à commutation photochromique sont utilisées.

5. Procédé selon l'une quelconque des revendications 2 à 4, **caractérisé en ce qu'**une conductivité électrique de l'adhésif thermofusible est modifiée par les nanoparticules.

6. Procédé selon la revendication 5, **caractérisé en ce que** la conductivité est modifiée de sorte que l'adhésif thermofusible puisse être chauffé et fondu par application d'une tension.

7. Procédé selon l'une quelconque des revendications 1 à 6, **caractérisé en ce que** l'ester de polysaccharide (6) est isolé par lavage avec de l'isopropanol, l'isopropanol étant soutiré et lavé avec de la soude caustique éthanolique, ce qui permet de régénérer l'imidazole (1).

8. Procédé selon l'une quelconque des revendications précédentes, **caractérisé en ce qu'**exactement un polysaccharide est transformé en exactement un ester de polysaccharide.
